# EUROPÄISCHE PATENTSCHRIFT

(11) **EP 0 602 456 B1**
(45) Veröffentlichungstag und Bekanntmachung des Hinweises auf die Patenterteilung: **12.03.1997**
(21) Anmeldenummer: 93119357.7
(22) Anmeldetag: 01.12.1993
(51) Int. Cl.: F16L 3/10

(54) **Rohrschelle**
Pipe clamp
Collier pour tuyaux

(30) Priorität: 03.12.1992 DE 9216499 U
(43) Veröffentlichungstag der Anmeldung: 22.06.1994
(73) Patentinhaber: BTI BEFESTIGUNGSTECHNIK GmbH & Co. KG, 74653 Ingelfingen (DE); Berner GmbH, 74653 Künzelsau (DE)
(72) Erfinder: Runge, Erich, D-74653 Künzelsau (DE)
(74) Vertreter: Bunke, Holger, Dr.rer.nat. Dipl.-Chem.

(56) Entgegenhaltungen:
- DE-A- 3 439 418
- DE-U- 9 209 812

## Beschreibung

Die Erfindung betrifft eine Rohrschelle mit einer Schraubensicherung aus einem Ober- und einem Unterteil, welche durch ein Steckscharnier schwenkbar miteinander verbunden sind und jeweils einen langlochartig durchbrochenen Flansch aufweisen, wobei im Flansch des Oberteils ein ausgestanzter Lappen als Halterung für die Schraubensicherung vorgesehen ist, während der Flansch des Unterteils geschlitzt und zur Aufnahme des Kopfs einer in die Schraubensicherung eingreifenden Schraube abgekröpft ist.

Rohrschellen dieser Gattung sind aus den Gebrauchsmustern DE-U1-87 03 752 und DE-U1-92 06 091 bekannt. Bei der erstgenannten bekannten Bauart wird als Schraubenmutter entweder eine gewöhnliche Vierkantmutter oder ein vorzugsweise rechteckiges Gewindeplättchen verwendet, welche sich durch Vibrationen auf dem Transportweg leicht von der Schraube lösen, unter den ausgestanzten Lappen des Oberteil-Flansches hindurchrutschen und seitlich herausfallen. Bei der zweitgenannten bekannten Bauart wird das unbeabsichtigte Lösen der vormontierten Schraube und das seitliche Herausfallen des Mutternblechs dadurch verhindert, daß das Gewindeplättchen gleichzeitig als Sicherungsblech ausgebildet ist, welches mit seinen Sicherungslappen einen ausgestanzten Lappen des Oberteilflansches umgreift und/oder in die langlochartige Durchbrechung des Oberteilflansches eingreift.

Indessen ist auch die zweitgenannte bekannte Bauart noch mit Nachteilen behaftet, deren Beseitigung mit der vorliegenden Erfindung angestrebt wird. So ist es mühsam und zeitaufwendig, die Schraube zum Zwecke der Vormontage in das als Mutternblech verwendete Gewindeplättchen einzuschrauben. Vor allem aber ist die Endmontage dieser Rohrschelle nach dem provisorischen Einhängen des Schraubenkopfs in den abgekröpften Flansch des Unterteils mühsam und zeitaufwendig, weil nämlich die Verschlußschraube mit einem Schraubendreher über ihre ganze Länge eingeschraubt werden muß. Da derartige Rohrschellen häufig an der Decke, an unzugänglichen und schlecht beleuchteten Stellen eines Rohbaus montiert werden, besteht seit langem ein Bedürfnis an der Schaffung einer Lösung, die eine schnellere und einfachere Montage, gerade auch an schlecht zugänglichen Stellen oder schlecht beleuchteten Orten, ermöglicht. Es kommt noch hinzu, daß die bekannten Bauarten mit relativer Genauigkeit bezüglich des notwendigen Spiels zwischen Schraubenmutter bzw. Mutternblech und den abgekröpften oder nicht-abgekröpften, als Halterungen dienenden ausgestanzten Lappen des Oberteilflansches hergestellt werden mußten. Denn das provisorische Einhängen des Schraubenkopfes in den abgekröpften Flansch des Unterteils erfordert ein seitliches Spiel der vormontierten Schraube, das ausreichend groß ist, damit der Schraubenkopf über die äußere Gleitfläche der Abkröpfung des Unterteilflanschs hinweg gleiten und schließlich die Abkröpfung untergreifen kann.

Der Erfindung liegt die Aufgabe zugrunde, eine Rohrschelle der eingangs genannten Gattung so zu verbessern, daß sowohl die Vormontage der Verschlußschraube als auch das endgültige Schließen der Rohrschelle erheblich einfacher und schneller als bisher ermöglicht wird und gleichzeitig die Herstellung der Rohrschelle vereinfacht und verbilligt wird, indem nämlich auf die Einhaltung eines bestimmten Spiels beweglicher vormontierter Teile verzichtet werden kann.

Diese Aufgabe wird bei einer Rohrschelle der genannten Gattung erfindungsgemäß durch die Merkmale des kennzeichnenden Teils von Anspruch 1 gelöst.

Die Verwendung einer Federblech-Klemmutter anstelle einer gewöhnlichen Schraubenmutter oder eines Mutternblechs bei der erfindungsgemäßen Rohrschelle ist mit ganz erheblichen Vorteilen verbunden: Die Verschlußschraube der Rohrschelle muß zum Zwecke der Vormontage nicht mehr in eine Mutter eingedreht werden, sondern braucht nur noch in die Klemmutter soweit eingedrückt zu werden, daß die nach dem Gewinde gebogenen Zinken über die ersten zwei oder drei Gewindegänge der Schraube gleiten und mit dem Gewinde verrasten. Nach dem Einhängen des Schraubenkopfs in den geschlitzten und abgekröpften Flansch des Unterteils der Rohrschelle braucht die Schraube nicht mehr wie bisher vollständig eingedreht zu werden, sondern es genügt, auf den Schraubenkopf mit einem beliebigen Werkzeug eine geringe Kraft in Axialrichtung der Schraube auszuüben, um sie fast vollständig durch die Klemmmutter hindurchzudrücken. In den meisten Fällen kann auf ein vollständiges Anziehen der Klemmutter, wodurch der gebogene Federstahlstreifen gestreckt und dadurch der Anpreßdruck der gebogenen Zinken erhöht wird, verzichtet werden. Soll die Schraube aber dennoch vollständig angezogen werden, so genügen nach dem axialen Durchschieben 1 bis 3 Umdrehungen mit einem Schraubendreher. Es ist für den Fachmann offensichtlich, daß sowohl die Vormontage als auch die Endmontage der erfindungsgemäßen Rohrschelle wesentlich schneller und einfacher bewerkstelligt werden können, als dies bisher der Fall war.

Ein weiterer Vorteil der erfindungsgemäßen Konstruktion besteht darin, daß die Federblech-Klemmutter ohne Spiel auf dem Flansch des Oberteils befestigt werden kann, so daß auf die Einhaltung bestimmter Toleranzen verzichtet werden kann, weil nämlich die seitliche Beweglichkeit der vormontierten Schraube allein durch die Klemmung bzw. Verrastung zwischen dem Schraubengewinde und den Zinken der Klemmutter gewährleistet ist.

Bei einer vorteilhaften Weiterbildung der erfindungsgemäßen Rohrschelle weist die Federblech-Klemmutter eine Drehsicherung auf, welche verhindert, daß sich die Klemmutter, falls sie nicht von vornherein mit dem Flansch des Oberteils fest verbunden ist, durch Vibrationen während des Transports lösen und seitlich herausfallen kann. Vorzugsweise weist die Klemmutter mindestens einen Sicherungslappen als Drehsicherung auf. Besonders bevorzugt sind an zwei gegenüberliegenden Kanten der Klemmutter jeweils mindestens ein Sicherungslappen als Drehsicherung vorgesehen, beispielsweise zwei Sicherungslappen an einer Kante und ein Sicherungslappen an der dieser Kante gegenüberliegenden Kante.

Besonders bevorzugt ist eine Ausführungsform, bei der die Klemmutter an einer ihrer Kanten zwei durch eine Nut voneinander getrennte Sicherungslappen aufweist. Vorteilhaft sind die Abmessungen dieser Nut so gewählt, daß die beiden, durch Einbringen der Nut entstandenen Sicherungslappen den ausgestanzten Lappen des Flansches des Oberteils der Rohrschelle umgreifen, wodurch sich eine besonders sichere, gleichzeitig aber einfach herstellbare und leicht montierbare Drehsicherung ergibt.

Bei einer weiteren vorteilhaften Ausgestaltung der erfindungsgemäßen Rohrschelle ist an der den Sicherungslappen, die durch eine Nut gebildet werden, gegenüberliegenden Kante der Federblech-Klemmutter ein weiterer Sicherungslappen mittig angeordnet, der in die langlochartige Durchbrechung des Oberteils der Rohrschelle eingreift.

Bei einer weiteren vorteilhaften Ausführungsform der Erfindung weist der Flansch des Oberteils eine zusätzliche Halterung für die Klemmutter auf. Diese zusätzliche Halterung ist bevorzugt an dem dem ausgestanzten Lappen des Oberteilflansches gegenüberliegenden Ende der langlochartigen Durchbrechung angeordnet. Die zusätzliche Halterung kann ein zweiter ausgestanzter Lappen sein oder aber eine überhängende Schnittkante im Oberteil der Rohrschelle, am inneren Ende der langlochartigen Durchbrechung.

Vorzugsweise ist die Klemmutter ohne Spiel auf dem Flansch des Oberteils befestigt, z.B. durch den als Halterung vorgesehenen ausgestanzten Lappen im Flansch des Oberteils, der etwas zurückgebogen werden kann, um die Klemmutter festzuklemmen.

Obwohl die Verschlußschraube der erfindungsgemäßen Rohrschelle an sich jede Art von Gewinde tragen kann, sind Schrauben mit Sägezahn- oder Blechschraubengewinde besonders bevorzugt, weil sie sich besonders leicht in die Federblech-Klemmutter eindrücken lassen, aber besonders schwer oder überhaupt nicht in der umgekehrten Richtung, z.B. unter dem gegebenenfalls ganz erheblichen Gewicht der montierten Rohrleitungen herausziehen lassen, während das Herausdrehen dieser Schraubentypen selbstverständlich jederzeit mit Hilfe eines Schraubendrehers möglich bleibt.

Gewünschtenfalls kann die nur einige wenige Gewindegänge tief in die Klemmutter eingedrückte und dadurch vormontierte Schraube zusätzlich noch durch einen Klebepunkt auf der Rückseite der Klemmutter gegen Herausdrehen gesichert sein, wobei der Klebepunkt in herkömmlicher Weise durch Lack, Lot oder Kleber hergestellt werden kann.

Die Erfindung wird anhand einiger bevorzugter Ausführungsbeispiele in Verbindung mit der Zeichnung weiter erläutert:
- Fig. 1: ist eine perspektivische Ansicht der erfindungsgemäßen Rohrschelle, und zwar einmal nur in Form des Grundkörpers, ohne Schließschraube und Klemmutter (A), einmal mit Schließschraube und Klemmutter in vormontiertem, aber noch geöffnetem Zustand (B) und schließlich in geschlossenem Zustand (C);
- Fig. 2A: ist eine Seitenansicht der erfindungsgemäß eingesetzten Federblech-Klemmutter;
- die Fig. 2B bis 2D: sind Draufsichten auf drei verschiedene Ausführungsformen der Federblech-Klemmutter;
- Fig. 3: ist eine Front-Teilansicht der eingehängten, noch nicht geschlossenen Rohrschelle gemäß Fig. 1B, im Bereich der Flansche;
- Fig. 4 und Fig. 5: sind perspektivische Ansichten weiterer Ausführungsformen der erfindungsgemäßen Rohrschelle, entsprechend Fig. 1 jeweils ohne Schließschraube und Klemmutter (A), mit Schließschraube und Klemmutter in vormontiertem, aber noch geöffnetem Zustand (B) und in geschlossenem Zustand (C).

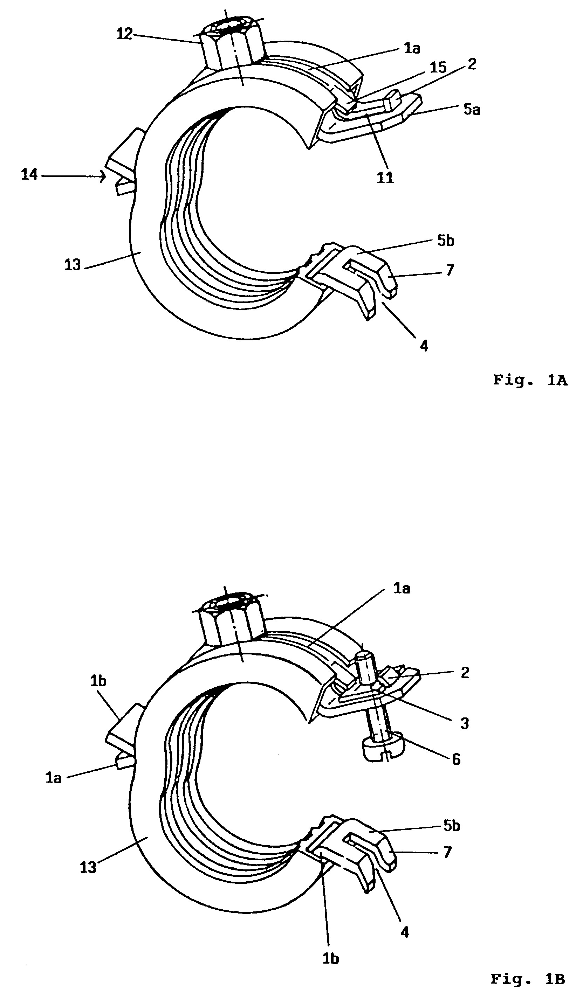

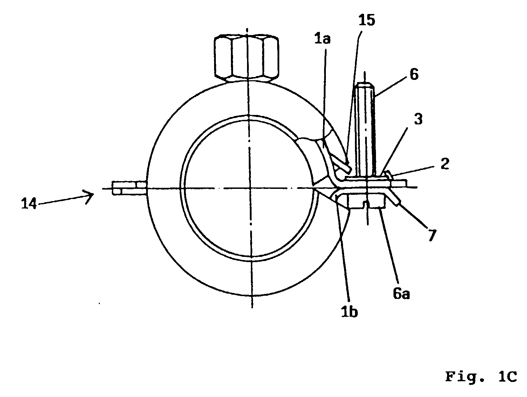

Die erfindungsgemäße Rohrschelle (Fig. 1A) besteht aus einem Oberteil 1a und einem Unterteil 1b, welche durch ein Steckscharnier 14 schwenkbar miteinander verbunden sind. Oberteil 1a und Unterteil 1b bestehen aus im wesentlichen halbkreisförmig gebogenen Blechstreifen, wobei die mit dem zu befestigenden Rohr in Berührung kommenden Innenflächen sowie die seitlichen Ränder und Kanten durch ein übergezogenes manschettenartiges Gummiprofil 13 abgedeckt sind. Auf die Außenseite des Oberteils 1a ist etwa mittig eine Sechskantmutter 12 aufgelötet oder auf andere Weise befestigt, damit die Rohrschelle an einem in der Wand oder an der Decke befestigten Gewindebolzen entsprechenden Durchmessers und passenden Gewindes befestigt werden kann.

Die freien Enden des Oberteils 1a und des Unterteils 1b sind jeweils zu einem Flansch 5a bzw. 5b abgebogen. Der Flansch 5a des Oberteils 1a weist eine langlochartige Durchbrechung 11, der Flansch 5b des Unterteils 1b eine entsprechende Durchbrechung in Form eines Schlitzes 4 auf, wobei beide Durchbrechungen dem Durchstecken der Schließschraube 6 dienen. Der untere Flansch 5b besitzt eine Abkröpfung 7, die der sicheren Halterung des Schraubenkopfs 6a dient.

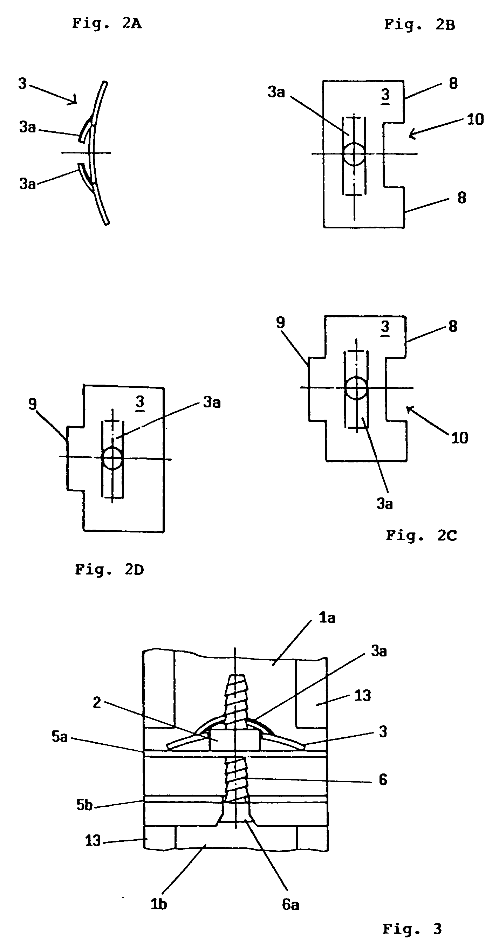

Im Flansch 5a des Oberteils 1a ist ein Lappen 2 ausgestanzt, welcher als Halterung für eine Federblech-Klemmutter 3 (Fig. 1B, Fig. 2A bis 2D) dient. Die Klemmutter 3 weist eine Drehsicherung, die gleichzeitig als Schutz gegen seitliches Herausfallen dient, auf, und zwar in der Weise, daß die Klemmutter 3 an einer ihrer Kanten zwei durch eine Nut 10 (Fig. 2B, Fig. 2C) voneinander getrennte Sicherungslappen 8 aufweist, die den ausgestanzten Lappen 2 des Flansches 5a des Oberteils 1a umgreift. Dadurch wird ein seitliches Herausfallen der Federblech-Klemmutter 3 für den Fall verhindert, daß sich die Schraube 6 unbeabsichtigt, durch Vibrationen oder dergleichen, aus dem Mutterngewinde lösen sollte, sofern die Klemmutter 3 nicht ohnehin mit dem Flansch 5a fest verbunden ist.

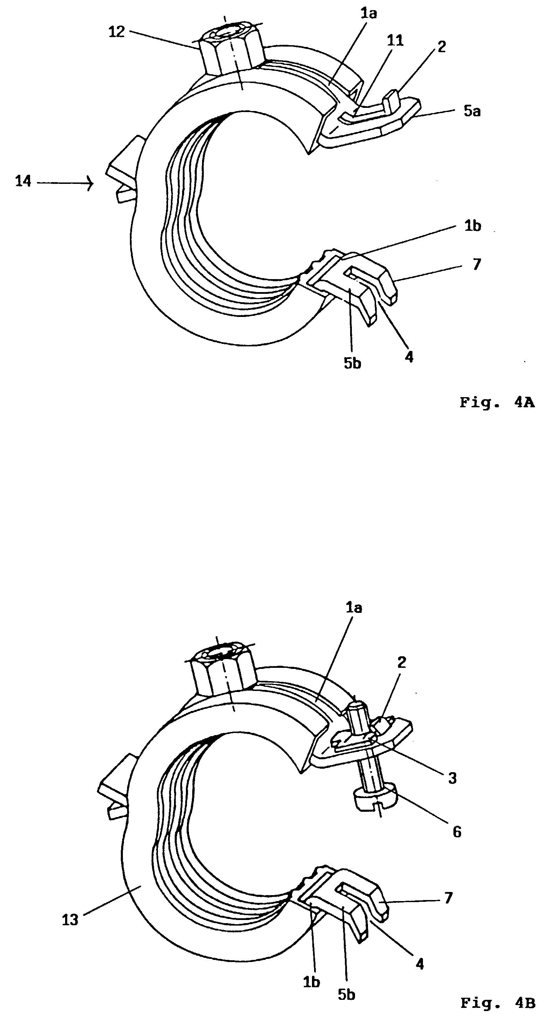

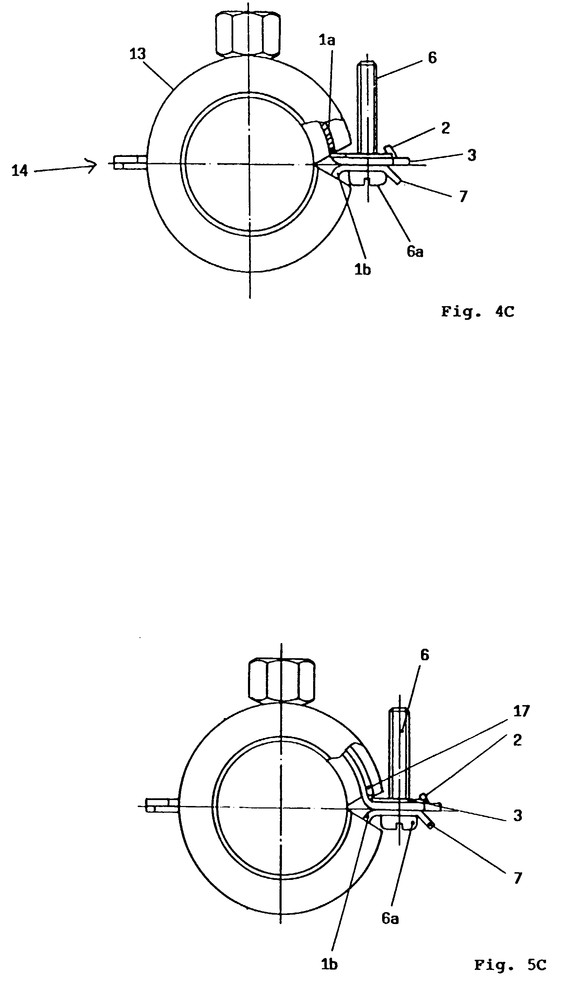

Zusätzlich zu den beiden Sicherungslappen 8 kann die Klemmutter 3 an ihrer gegenüberliegenden Kante einen oder mehrere weitere Sicherungslappen 9 aufweisen (Fig. 2C, Fig. 2D); vorzugsweise ist ein solcher zusätzlicher Sicherungslappen 9 mittig angeordnet und in seinen Abmessungen so gewählt, daß er in die langlochartige Durchbrechung 11 des Oberteils 1a eingreift (Fig. 4B, Fig. 4C).

Die Klemmutter 3 wird vorzugsweise auf dem Flansch 5a des Oberteils 1a dadurch befestigt, daß der ausgestanzte Lappen 2 nach dem Einlegen der Klemmutter 3 zurückgebogen wird (Fig. 1B, Fig. 1C).

Wenn das zu befestigende Rohr in die vormontierte, d.h. Schraube und Klemmutter tragende Rohrschelle gemäß Fig. 1B, Fig. 4B, Fig. 5B eingelegt und die Klemmutter 3 auf dem Flansch 5a festgeklemmt oder auf andere Weise befestigt ist, brauchen die beiden Rohrschellenteile 1a, 1b nur zusammengedrückt zu werden, bis sich die Schraube 6 federnd über die Abkröpfung 7 des Flansches 5b geschoben hat (Fig. 3). Eine durch die Gummimanschette 13 verstärkte Vorspannung der Rohrschellenteile 1a, 1b sorgt dann dafür, daß der Schraubenkopf 6a satt an der Außenseite des Flansches 5b hinter der Abkröpfung 7 anliegt, so daß die Schraube 6 bequem durch die Klemmutter 3 bis auf die letzten 1 bis 3 Gewindegänge hindurchgedrückt und gegebenenfalls manuell oder maschinell festgezogen werden kann, bis die Schließstellung (Fig. 1C, Fig. 4C, Fig. 5C) erreicht ist.

Beim Hindurchdrücken der Schraube 6 durch die Klemmutter 3 gleiten die gebogenen Zinken 3a (Fig. 2A, Fig. 3) der Klemmutter 3 über die Gewindegänge des Schraubengewindes, das vorzugsweise als Sägezahn- oder Blechschraubengewinde ausgebildet ist, hinweg, wobei die Schraube 6 in der Gegenrichtung nur durch Drehen, nicht durch bloßes Ausziehen, bewegt werden kann.

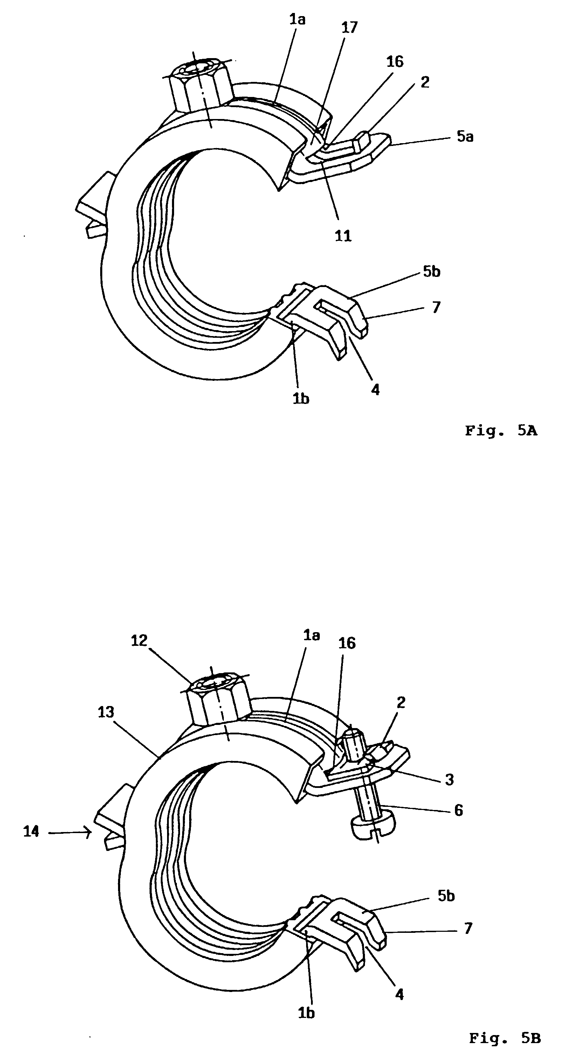

Die Ausführungsformen gemäß Figuren 4A bis C und Fig. 5A bis C unterscheiden sich von der Ausführungsform gemäß Fig. 1A bis C nur durch die Art der zusätzlichen Halterung für die Klemmutter 3 auf dem Flansch 5a des Oberteils 1a, die sich an dem dem ausgestanzten Lappen 2 gegenüberliegenden Ende der langlochartigen Durchbrechung 11 befindet. Diese zusätzliche Halterung kann ein zweiter ausgestanzter Lappen 15 sein (Fig. 1A bis C) oder aber eine überhängende Schnittkante 16 einer in das Oberteil 1a eingeformten Sicke 17 (Fig. 5A bis C), die als Anschlag für die Klemmutter 3 dient. Bei der Ausführungsform gemäß Fig. 4A bis C dient das innere Ende der langlochartigen Durchbrechung 11 selbst als Anschlag für den in die Durchbrechung 11 eingreifenden Lappen 9 einer Klemmutter 3 gemäß den Ausführungsformen gemäß den Fig. 2C oder 2D.

Da die Klemmutter 3 mit ihren gebogenen Zinken 3a selbst für die erforderliche Beweglichkeit der vormontierten Schraube 6 sorgt, ist die Einhaltung eines bestimmten Spiels zwischen der Klemmutter 3 einerseits und dem Flansch 5a mit dem ausgestanzten Lappen 2 andererseits nicht mehr erforderlich, was die Herstellung der erfindungsgemäßen Rohrschelle vereinfacht und verbilligt. Außerdem braucht der ausgestanzte Lappen 2 des Flansches 5a nicht mehr in sich abgekröpft zu werden, wie dies bei bekannten Rohrschellen gerade wegen der früher notwendigen Sicherstellung dieses Spiels erforderlich war.

## Patentansprüche

1. Rohrschelle mit einer Schaubensicherung, aus einem Ober- und einem Unterteil, welche durch ein Steckscharnier schwenkbar miteinander verbunden sind und jeweils einen langlochartig durchbrochenen Flansch aufweisen, wobei im Flansch des Oberteils ein ausgestanzter Lappen als Halterung für die Schraubensicherung vorgesehen ist, während der Flansch des Unterteils geschlitzt und zur Aufnahme des Kopfs einer in die Schraubensicherung eingreifenden Schraube (6) abgekröpft ist, **dadurch gekennzeichnet,** daß die Schraubensicherung eine Federblech-Klemmutter (3) in Form eines gebogenen Federstahl-Streifens ist, der zwei nach dem Gewinde der einzusetzenden Schraube (6) gebogene Zinken aufweist, die sich beim Anziehen der Schraube (6) in den Gewindegrund pressen, wobei die Federblech-Klemmutter gleichzeitig Mutter der Schraube (6) ist.

2. Rohrschelle nach Anspruch 1, **dadurch gekennzeichnet,** daß die Klemmutter (3) eine Drehsicherung aufweist.

3. Rohrschelle nach Anspruch 2, **dadurch gekennzeichnet,** daß die Klemmutter (3) mindestens einen Sicherungslappen (8, 9) als Drehsicherung aufweist.

4. Rohrschelle nach Anspruch 3, **dadurch gekennzeichnet,** daß die Klemmutter (3) an zwei gegenüberliegenden Kanten jeweils mindestens einen Sicherungslappen (8, 9) als Drehsicherung aufweist.

5. Rohrschelle nach einem der Ansprüche 3 bis 4, **dadurch gekennzeichnet,** daß die Klemmutter (3) an einer ihrer Kanten zwei durch eine Nut (10) voneinander getrennte Sicherungslappen (8) aufweist.

6. Rohrschelle nach Anspruch 5, **dadurch gekennzeichnet,** daß die beiden Sicherungslappen (8) den ausgestanzten Lappen (2) des Flansches (5a) des Oberteils (la) umgreifen.

7. Rohrschelle nach Anspruch 5 oder 6, **dadurch gekennzeichnet,** daß an der den Sicherungslappen (8) gegenüberliegenden Kante der Klemmutter (3) ein Sicherungslappen (9) mittig angeordnet ist, der in die langlochartige Durchbrechung (11) des Oberteils (1a) eingreift.

8. Rohrschelle nach einem der Ansprüche 1 bis 7, **dadurch gekennzeichnet,** daß der Flansch (5a) des Oberteils (1a) eine zusätzliche Halterung für die Klemmutter (3) aufweist.

9. Rohrschelle nach Anspruch 8, **dadurch gekennzeichnet,** daß die zusätzliche Halterung an dem dem Lappen (2) gegenüberliegenden Ende der langlochartigen Durchbrechung (11) angeordnet ist.

10. Rohrschelle nach Anspruch 8 oder 9, **dadurch gekennzeichnet,** daß die zusätzliche Halterung ein zweiter ausgestanzter Lappen (15) ist.

11. Rohrschelle nach Anspruch 9, **dadurch gekennzeichnet,** daß die zusätzliche Halterung durch eine überhängende Schnittkante (16) einer in das Oberteil (1a) eingeformten Sicke (17) gebildet ist.

12. Rohrschelle nach einem der Ansprüche 1 bis 11, **dadurch gekennzeichnet,** daß die Klemmutter (3) ohne Spiel auf dem Flansch (5a) des Oberteils (1a) befestigt ist.

13. Rohrschelle nach einem der Ansprüche 1 bis 12, **dadurch gekennzeichnet,** daß die Schraube (6) ein Sägezahn- oder Blechschraubengewinde aufweist.

## Claims

1. A pipe clamp comprising a screw securing means made up of an upper and a lower part, which are pivotally connected together by a plug hinge and respectively possess a flange having a slot-like opening therein, a stamped out lug being provided in the flange of the upper part as a holding means for a screw securing means, whereas the flange of the lower part is slit and bent at an angle to receive the head of a screw fitting into the screw securing means, characterized in that the screw securing means is a spring sheet metal clamping nut (3) in the form of a bent steel metal strip having two prongs which are bent toward the thread of the screw (6) to be inserted and which on tightening up the screw (6) press into the root of the thread, said spring sheet metal clamping nut simultaneously constituting the nut of the screw (6).

2. The pipe clamp as claimed in claim 1, characterized in that the clamping nut (3) possesses an anti-rotation means.

3. The pipe clamp as claimed in claim 2, characterized in that the clamping nut (3) possesses at least one securing lug (8, 9) as an anti-rotation means.

4. The pipe clamp as claimed in claim 3, characterized in that at two oppositely placed edges the clamping nut (3) possesses in each case at least one securing lug (8, 9) as an anti-rotation means.

5. The pipe clamp as claimed in either claim 3 or in claim 4, characterized in that on one of its edges the clamping nut (3) possesses two securing lugs (8) separated from one another by a groove (10).

6. The pipe clamp as claimed in claim 5, characterized in that the two securing lugs (8) fit around the stamped out lug (2) of the flange (5a) of the upper part (1a).

7. The pipe clamp as claimed in claim 5 or in claim 6, characterized in that on the edge, which is opposite to the securing lugs (8), of the clamping nut (3) a securing lug (9) is centrally arranged and fits into the slot-like opening (11) in the upper part (1a).

8. The pipe clamp as claimed in any one of the claims 1 through 7, characterized in that the flange (5a) on the upper part (1a) possesses an additional holding means for the clamping nut (3).

9. The pipe clamp as claimed in claim 8, characterized in that the additional holding means is arranged on the end, which is opposite to the lug (2), of the slot-like opening (11).

10. The pipe clamp as claimed in claim 8 or in claim 9, characterized in that the additional holding means is a second stamped-out lug (15).

11. The pipe clamp as claimed in claim 9, characterized in that the additional holding means is formed by the overhanging cut edge (16) of a corrugation (17) indented in the upper part (1a).

12. The pipe clamp as claimed in any one of the claims 1 through 11, characterized in that the clamping nut (3) is attached without play on the flange (5a) of the upper part (1a).

13. The pipe clamp as claimed in any one of the claims 1 through 12, characterized in that the screw (6) has a saw-tooth or sheet metal screw thread.

## Revendications

1. Collier pour tuyau, équipé d'une fixation à vis constituée d'une partie supérieure et d'une partie inférieure, reliées ensemble de façon pivotante au moyen d'une charnière à enfichage et présentant chacune une bride traversée par un trou allongé, une languette obtenue par découpage d'estampage et servant de fixation pour une fixation à vis étant prévue dans la bride de la partie supérieure tandis que la bride de la partie inférieure est fendue et est rabattue pour recevoir la tête d'une vis s'engageant dans la fixation à vis, caractérisé en ce que la fixation à vis est un écrou auto-bloquant à tôle' élastique (3), se présentant sous la forme d'une bande d'acier à ressort, cintrée, présentant deux dents pliées vers le filetage de la vis (6) à insérer et pressant dans le fond de filetage lorsque la vis (6) est serrée, l'écrou auto-bloquant à tôle élastique étant simultanément l'écrou de la vis (6).

2. Collier pour tuyau selon la revendication 1, caractérisé en ce que l'écrou auto-bloquant (3) présente une sécurité de rotation.

3. Collier pour tuyau selon la revendication 2, caractérisé en ce que l'écrou auto-bloquant (3) présente au moins une languette de sécurité (8, 9) à titre de sécurité de rotation.

4. Collier pour tuyau selon la revendication 3, caractérisé en ce que l'écrou auto-bloquant (3) présente sur chacune de deux arêtes opposées au moins une languette de sécurité (8, 9) faisant office de sécurité de rotation.

5. Collier pour tuyau selon l'une des.revendications 3 et 4, caractérisé en ce que l'écrou auto-bloquant (3) présente sur l'une de ses arêtes deux languettes de sécurité (8), séparées l'une de l'autre par une rainure (10).

6. Collier pour tuyau selon la revendication 5, caractérisé en ce que les deux languettes de sécurité (8) entourent la languette (2) obtenue par découpage d'estampage de la bride (5a) de la partie supérieure (1a).

7. Collier pour tuyau selon la revendication 5 ou 6, caractérisé en ce que sur l'arête, opposée aux languettes de sécurité (8), de l'écrou auto-bloquant (3), est disposée centralement une languette de sécurité (9) s'engageant dans le passage (11) en trou allongé de la partie supérieure (1a).

8. Collier pour tuyau selon l'une des revendications 1 à 7, caractérisé en ce que la bride (5a) de la partie supérieure (1a) présente une fixation supplémentaire pour l'écrou auto-bloquant (3).

9. Collier pour tuyau selon la revendication 8, caractérisé en ce que la fixation supplémentaire est disposée sur l'extrémité, opposée à la languette (2), du passage (11) en trou allongé.

10. Collier pour tuyau selon la revendication 8 ou 9, caractérisé en ce que la fixation supplémentaire est une deuxième languette (15) obtenue par découpage d'estampage.

11. Collier pour tuyau selon la revendication 9, caractérisé en ce que la fixation supplémentaire est constituée par une arête découpée (16) en surplomb d'une moulure (17) creusée dans la partie supérieure (1a).

12. Collier pour tuyau selon l'une des revendications 1 à 11, caractérisé en ce que l'écrou auto-bloquant (3) est fixé sans jeu sur la bride (5a) de la partie supérieure (1a).

13. Collier pour tuyau selon l'une des revendications 1 à 12, caractérisé en ce que la vis (6) présente un filetage en dents de scie ou un filetage de vis à tôle.
